# EUROPEAN PATENT SPECIFICATION

(11) **EP 1 216 966 B1**
(45) Date of publication and mention of the grant of the patent: **08.03.2006**
(21) Application number: 01130593.5
(22) Date of filing: 21.12.2001
(51) Int. Cl.: C03B 9/41, G05B 19/042

(54) **Method of setting operations on a hollow glassware production line**
Verfahren zum einstellen von betriebsmassnahmen bei der herstellung von hohlglaswaren
Procédé pour régler des opérations pendant la production de verre creux

(30) Priority: 22.12.2000 IT TO001215
(43) Date of publication of application: 26.06.2002
(73) Proprietor: BOTTERO S.p.A., 12010 Cuneo (IT)
(72) Inventor: Lingua, Terenzio, 12100 Cuneo (IT); La Carrubba, Giovanni, 12100 Cuneo (IT); Ghinamo, Corrado, 12012 Boves (IT)
(74) Representative: Cerbaro, Elena

(56) References cited:
- EP-A- 0 628 520
- EP-A- 0 683 141
- EP-A- 1 006 420
- US-A- 3 905 793
- US-A- 4 705 552
- US-A- 5 345 389

## Description

The present invention relates to a method of setting operations - in particular manually or automatically activated operations - on a hollow glassware production line.

As is known, a hollow glassware production line comprises a glass gob feed assembly; an I.S. machine; and an unloading and checking assembly. The I.S. machine in turn comprises a number of parallel sections (normally six to twelve) for simultaneously producing the same or different ware; and each line comprises a large number of moving members (some shared by all the sections, and others forming part of a specific section) which are each activated by an electric or pneumatic actuator and must therefore be synchronized with one another. Operation of the moving members of each line is controlled on the basis of a production plan (or so-called "recipe") which depends on the type of ware being produced, the type of process employed by each section, and the specific section in which the ware is produced. Operation of the moving members can be controlled by buttons on the I.S. machine frame to perform predetermined functions, such as expelling a predetermined number of articles, lubrication, reducing cooling air supply to the molds, or stopping a given member or an entire section.

At present, therefore, when setting up a new line, reconfiguring an existing line, or making production changeovers, all the line operating data is set, including the function related to each button (see e.g. EP 1 006 420 A1). More specifically, to construct the desired functions, a rigid procedure, involving predetermined steps, exists by which to set the operations or instructions to be performed and store the necessary data (including immediate or delayed function performance and the status of the relative indicator light) in a new recipe. The functions are coded under names selected at random each time by the technician and stored in the recipe, and which therefore only apply to that particular production plan.

This is disadvantageous since drawing up a new production plan or making changes to an existing one therefore means coding each function from scratch; moreover, the random manner in which the names are selected leads to confusion in the sense that an instruction with the same name may relate to different machine member commands, thus making fault-finding work difficult in the event of a breakdown.

The present Applicant has recently proposed a supervisor for simplifying the preparation of new recipes when setting up new lines and/or making production changes or alterations to existing settings. For which purpose, the supervisor stores the structural data of each line, production process data, and product data separately in appropriate tables, and, by means of an instruction analyzer, processes the entered data to generate a new production plan containing specific instructions relating to the elementary operations to be performed by the line members, so that an existing production plan can be altered by simply altering specific data items. The rigidity of the current method of setting button-related functions, however, prevents the supervisor from being exploited to full advantage as regards drawing up, processing and actual use of the functions.

It is an object of the present invention to provide a method of setting button-related functions on a hollow glassware production line, designed to eliminate the aforementioned drawbacks.
According to the present invention, there is provided a method of setting functions on a hollow glassware production line comprising a number of controlled moving members, the method comprising the step of relating a button on said line to a function performable by at least one of said controlled moving members; and being characterized in that said step of relating comprises the step of storing at least one predefined elementary instruction in a special programming language.

A number of non-limiting embodiments of the invention will be described by way of example with reference to the accompanying drawings, in which:
Figure 1 shows an overall block diagram of the supervisor, and connection to various hollow glassware production lines;
Figure 2 shows a block diagram of part of Figure 1;
Figure 3 shows a simplified diagram of a hollow glassware production line;
Figure 4 shows a block diagram of a cross section of a single section of the Figure 3 line along line IV-IV in Figure 3;
Figure 5 shows a diagram of a block in Figure 2;
Figures 6 to 9 show a number of tables used by the supervisor in the setting method according to the present invention;
Figure 10 shows a flow chart of the present method;
Figures 11 to 13 show displays shown in the course of the present method;
Figure 14 shows a flow chart of the present method.

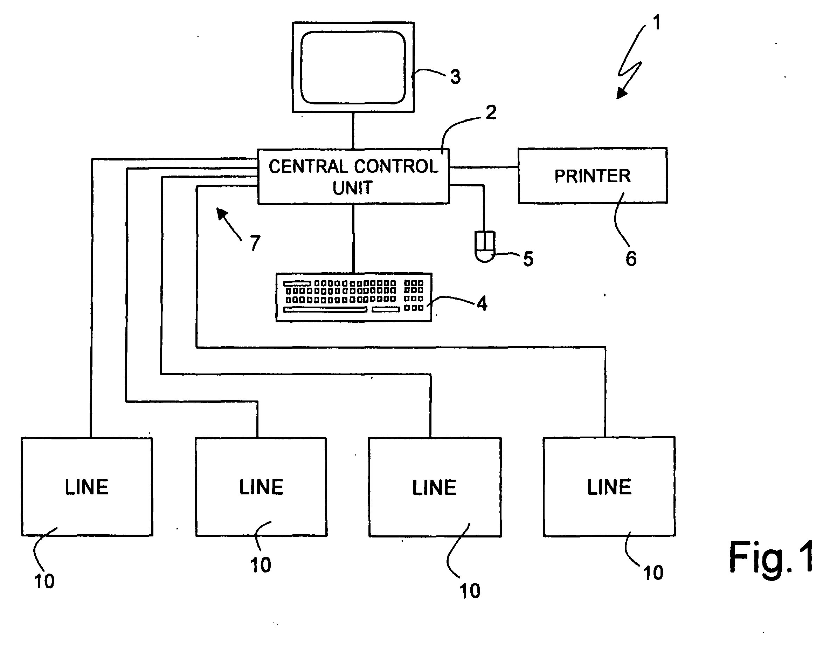

Number 1 in Figure 1 indicates a system for producing hollow glassware and comprising a central control unit 2 implementing a supervisor and connected to appropriate peripheral units, of which Figure 1 shows a video unit 3, a keyboard 4, a mouse 5, and a printer 6.

Central control unit 2 is connected over an appropriate electric network 7, e.g. an Ethernet network (registered trademark), to a number of hollow glassware production lines 10.

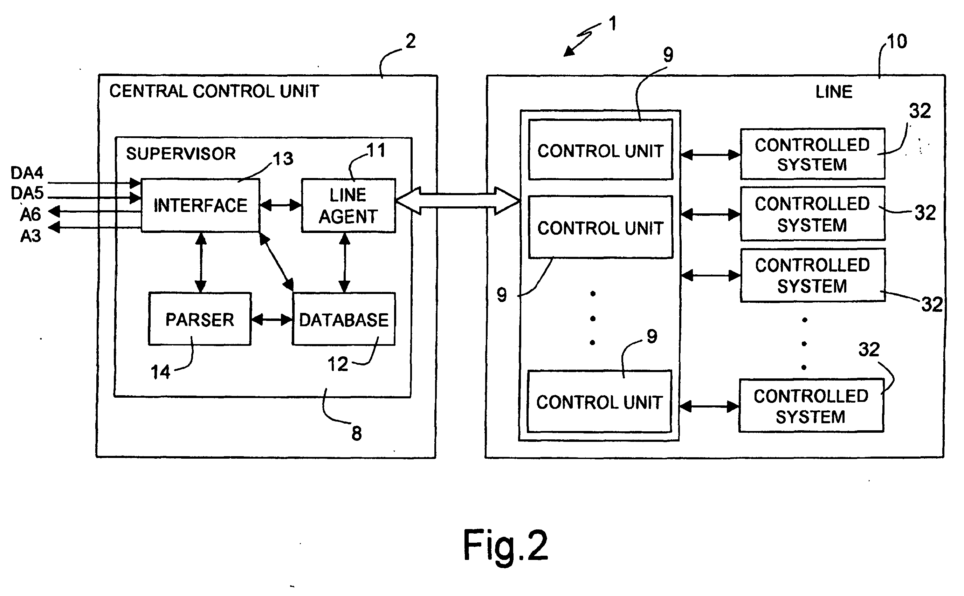

As shown in simplified manner in Figure 2, central control unit 2 comprises a supervisor 8 connected to one or more lines 10 (only one shown in Figure 2 for the sake of simplicity), each of which comprises a number of control units 9 (e.g. four) connected to a number of controlled systems 32.

Supervisor 8 is defined by a number of software modules comprising a line agent 11, which generates a virtual representation of a specific line 10 (a number of line agents 11 are therefore required in the event of multiple line control by the same supervisor 8). Line agent 11 handles all communication with respective control units 9, and is connected to a database 12, in which all the necessary line 10 operating data is stored (as described in detail later on), and to an interface 13 in turn connected to database 12 and to a parser 14 also connected to database 12.

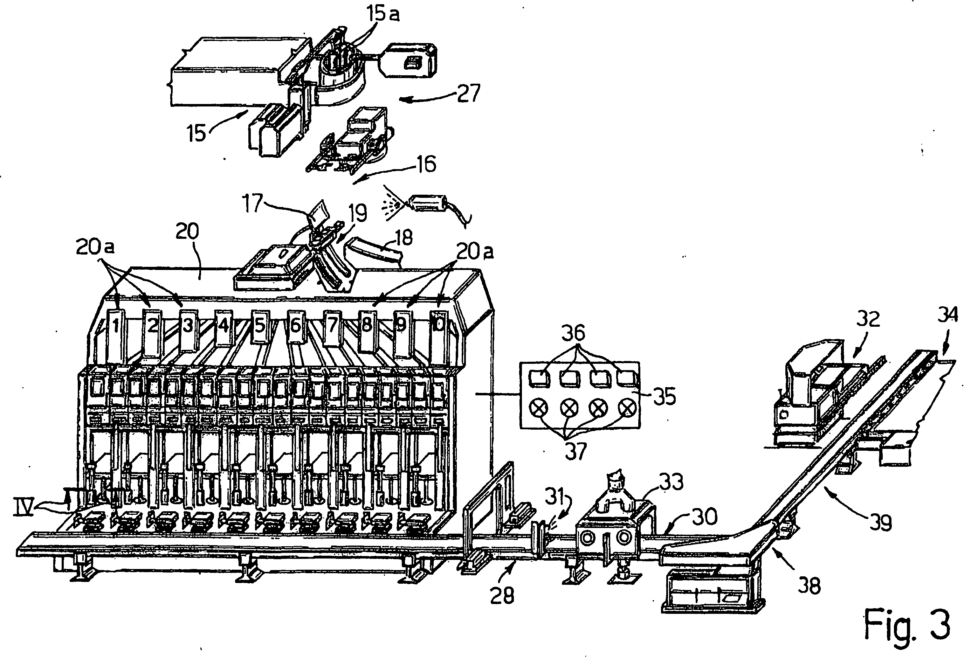

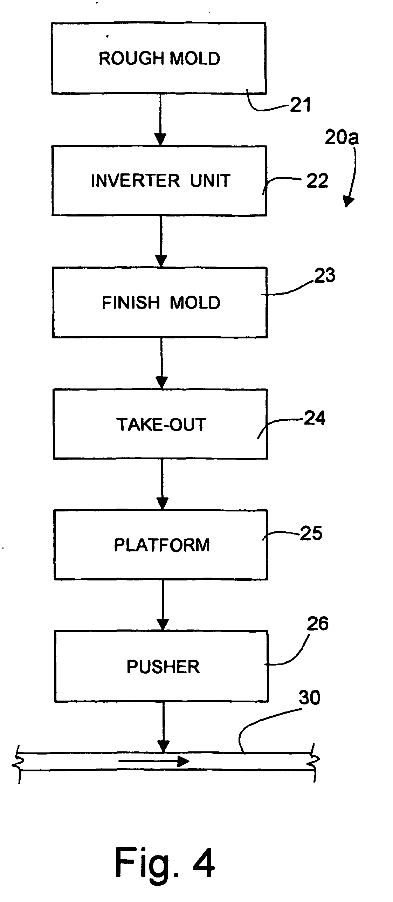

A simplified line 10 is shown in Figures 3 and 4 and described below relative to the members whose operation is set and checked by supervisor 8.

More specifically, line 10 comprises:
- a glass gob feed assembly 27;
- an I.S. machine 20 defined by a number of parallel ware molding sections 20a; and
- a ware unloading and checking assembly 28.

Glass gob feed assembly 27 comprises a molten glass feeder 15 connected to two punches 15a moving back and forth linearly to push the molten glass and form two glass beads; a scissor assembly 16 for cutting the glass beads into individual gobs; a plate 17 movable between a noninterference rest position and an intercepting work position in which it diverts the glass gobs away from the underlying members to an unloading channel 18, e.g. for cleaning; and a distributor 19 rotating in a given sequence to guide each glass gob to a given section underneath.

Each section 20a of I.S. machine 20 (the component parts of which are shown schematically in Figure 4) comprises a rough mold 21 movable between an open and a closed position, receiving one glass gob at a time, and producing a semifinished glass article from each gob; an inverter unit 22, which grips the semifinished article and turns it over into a finish mold 23, also movable between an open and a closed position, and in which the hollow glass ware is completed; a take-out member 24, which removes the finished ware from the finish mold and transfers it on to a fixed platform 25; and a pusher 26 for transferring the finished ware to ware unloading and checking assembly 28.

Ware unloading and checking assembly 28 is defined by a conveyor belt 30, which extends from the frame of I.S. machine 20 to a collecting section, and along which are installed various ware checking units, such as : an ejector 31 for removing any failed ware off the belt; a surface treating hood 33; a ware transfer member 38 for transferring ware on to an end conveyor belt 3°; and a stacker 32 for loading ware into an annealing furnace 34.

For each section 20a, the I.S. machine 20 frame is fitted with two panels 35 (only one shown schematically) having a number of buttons 36 and indicator lights 37 relating to particular operating stages of the respective section. Buttons 36 can be operated by a technician to perform particular functions or to stop section 20a in an emergency, and each correspond to a respective indicator light 37.

The above members (feeder 15, scissor assembly 16, plate 17, distributor 19, rough mold 21, finish mold 23, inverter unit 22, take-out member 24, pusher 26, conveyor belt 30, ejector 31, members 18, 33, 38, 39, 32, 34) are controlled, in known manner not shown in detail, by respective actuators defined by respective electric or pneumatic motors.

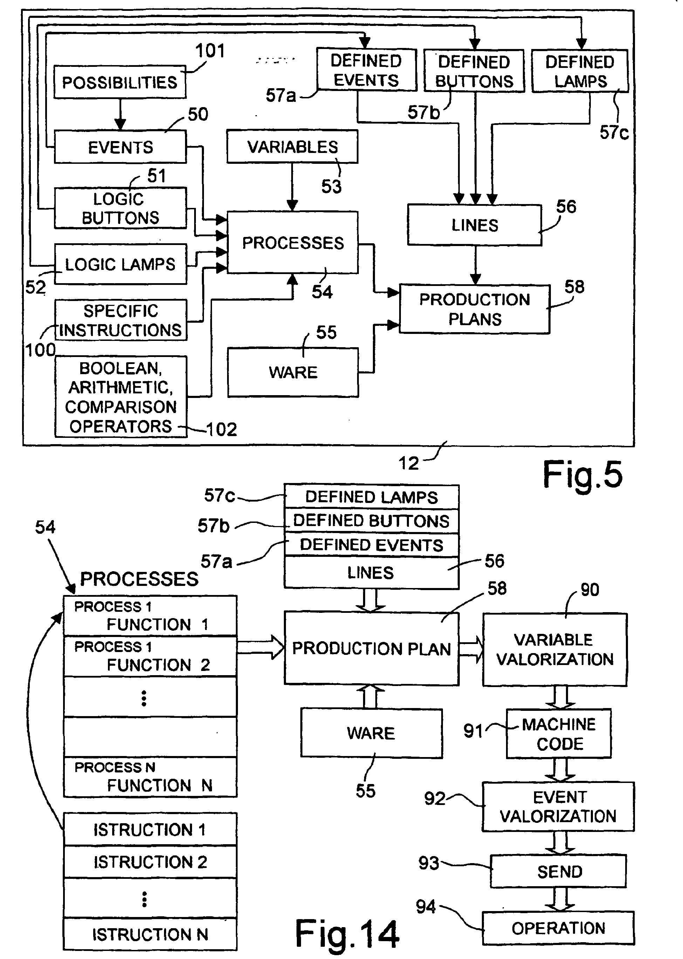

According to the invention, to set the functions related to each button 36, a special language is used containing instructions relating specifically to control of the I.S. machine.
The language according to the invention employs predefined lists or tables defining data base 12 and in which the necessary line 10 data, process data, and product data is stored. More specifically, as shown in Figure 5, the following tables are provided: an event table 50; a logic-button table 51; a logic-lamp table 52; a variables table 53; a process table 54; a ware table 55; a line table 56; a defined-event table 57a; a defined-button table 57b; a defined-lamp table 57c; a production plan table 58; an instruction table 100; and a possibility table 101.

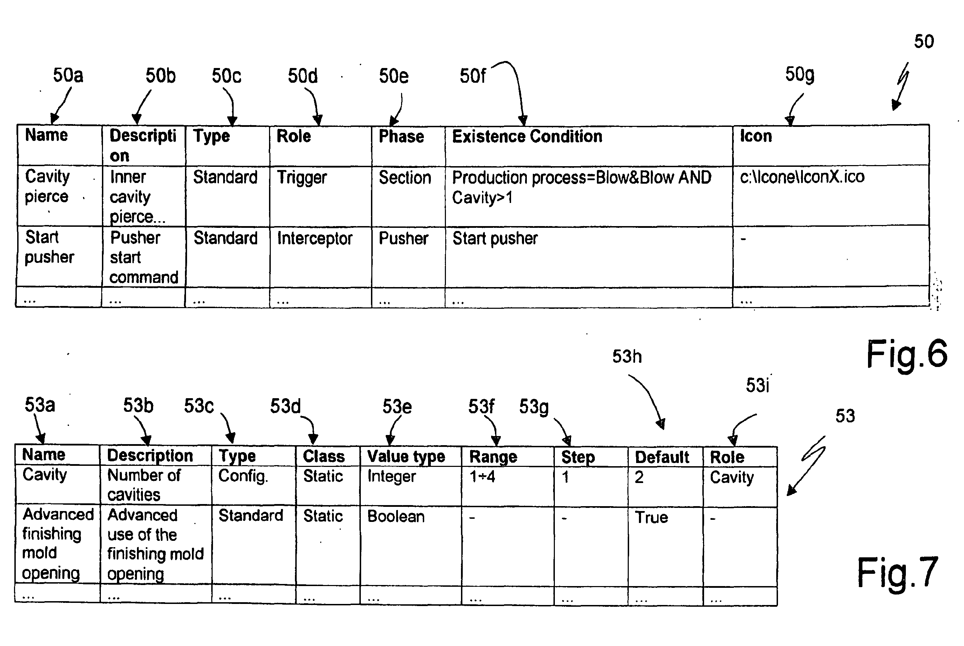

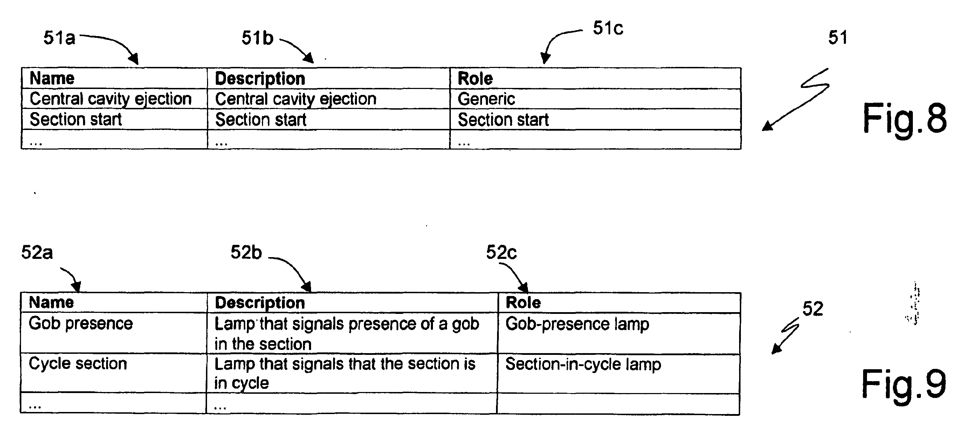

Event table 50 stores all the events necessary for correct operation of a given line, i.e. all the actions or functions performed by the various line section members - e.g. opening/closing the molds; operation of the inverter unit; operation of the pusher - and comprises the following fields (Figure 6): a name field 50a storing the name of each event (in the example shown, two events are stored: an inner-piercing event, relative to piercing of the neck portion of the semifinished article in the rough mold to facilitate air injection in the finish mold, and performed by a member with a respective pneumatic actuator; and a start-pusher event); a description field 50b storing a brief description of the event; a type field 50c storing the type of event, and specifically whether it is standard or additional; a role field 50d, which stores whether the event is generic, noncritical or related to critical functions/members of line 10; a phase field 50e storing which part of the line the event relates to in terms of timing; an existence condition field 50f, which stores whether the event is always present (in which case, the field is blank) or depends on particular conditions, such as the performance or not of a specific process operation, or the occurrence of a predetermined condition, such as the type of section tooling; and an icon field 50g storing the relative icon address.
Button table 51 stores all the logic buttons necessary for operation of a given line, and comprises the following fields (Figure 8): a name field 51a storing the name of each button; a description field 51b memorizing a brief description of the button; and a role field 51c memorizing the generic (noncritical) or specific (critical) function of the button. The defined-button table 57b relates the logic buttons to the physical buttons 36 on panel 35 necessary for operation of the respective section 20a.

Lamp table 52 memorizes all the indicator lights (logic lamps) necessary for operation of a given line, and comprises the following fields (Figure 9): a name field 52a memorizing the name of each lamp; a description field 52b memorizing a brief description of the lamp; and a role field 52c memorizing the generic (noncritical) or specific (critical) function of the lamp. The defined-lamp table 57c relates the logic lamps to the physical lamps 37 related to the respective buttons on the panel.

The data in button table 51 and lamp table 52 may be combined into one table.

Variables table 53 lists all the variables involved in the operation of a given line 10, i.e. all the conditions, situations or quantities varying from one line to another or within the same line in the course of the production sequence. Such variables may therefore depend on external situations, on the configuration of the line, or on the specific way in which the line operates. Variables table 53 is divided into a number of fields comprising (Figure 7): a name field 53a; a description field 53b; a type field 53c indicating whether the variable is standard (predefined by supervisor 8 and relative to a standard characteristic of I.S. machine 20, e.g. the possibility of the finish mold opening in advance), is an additional external variable (defined by the production engineer and which can be added when needed, e.g. the type of cooling unit), or is a configuration variable (e.g. the number of mold cavities); a class field 53d indicating whether the variable is dynamic (may change in value during operation of line 10 and is controlled by supervisor 8), static (does not change in value during operation of line 10 and is known when the production plan is transmitted to the respective line), or a system variable (may change in value but is controlled, not by supervisor 8, but by the timing system controlling pneumatic ware forming movements, such as the presence of a glass gob downstream from plate 17); a value type field 53e indicating whether the variable is boolean, whole, real, enumerative or a number range; a range field 53f indicating the range of possible variable values (e.g. in the case of mold cavities, the possibility of these ranging from 1 to 4); a step field 53g indicating the possible increment in the variable value within the range shown in range field 53f; a default field 53h memorizing the default value of the variable; and a role field 53i memorizing the function of the variable within the production process.

Process table 54 contains a detailed list of all the production processes involved in the operation of a given line 10. More specifically, process table 54 memorizes the relationship between each logic button and a specific function, which is defined using the data memorized in event table 50, button table 51, lamp table 52 and variables table 53, as described in detail below. Process table 54 is also related to a list of trigger events, i.e. events necessary for synchronizing specific steps in the process, and which are not conditioned by any other situation; and a list of "son" events, i.e. particular events which inherit the main characteristics of an event (so-called "father" event) in table 50. Son events act at given transient stages in a specific process, and cannot exist without a "father" event.

Ware table 55 lists all the articles than can be produced on a given line 10.

Line table 56 memorizes a list of all the lines in a given plant or group of plants, and is related to defined-event table 57a specifying the events actually possible on a given line; defined-button table 57b specifying the buttons actually present and their location on panel 35 of a given line; and defined-lamp table 57c specifying the lamps actually present and their location on panel 35. The defined events, defined buttons. and defined lamps form a subset of the events, buttons and lamps listed in event table 50, button table 51 and lamp table 52.

Specific-instruction table 100 contains the specific instructions defining a given function, and which may be of various types, such as : conditional instructions (IF, THEN, ELSE, END IF); basic instructions (force event state, define event state, define lamp state, wait for trigger event, wait for number of cycles, expel ware, define function state, etc.); loop and skip instructions (FOR, WHILE, GOTO, etc.). By means of these instructions, it is therefore possible, for example, to define whether a function is to be activated (i.e. performed in parallel with the functions already being performed) or deactivated (i.e. interrupted); whether a given event is to be activated or deactivated; whether a given lamp is to be turned on, off, or flashed; or whether to wait for a given condition, a given number of machine cycles, or a given trigger.

Possibility table 101 contains the possible states relative to each event (e.g. on/off; force/trigger/wait, etc.).

Finally, production plan table 58 combines all the information memorized in the previous tables to define specific recipes, and in particular uses the data memorized in process table 54, ware table 55, line table 56, defined-event table 57a, defined-button table 57b, and defined-lamp table 57c.

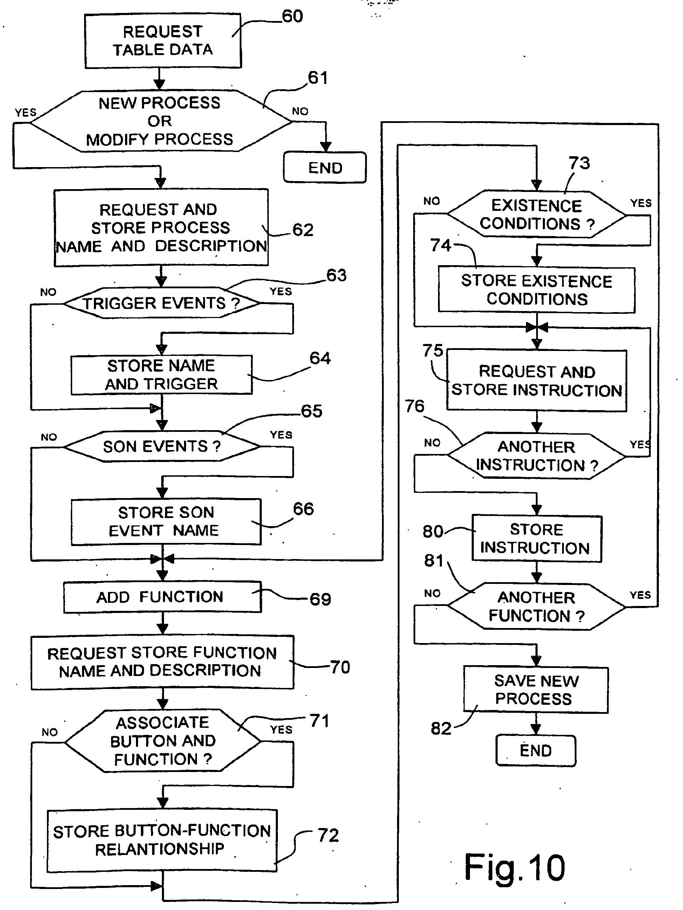

As shown in Figure 10, to define the various functions, the present method provides for first compiling event table 50 (by entering data in fields 50a-50g), button table 51 (by entering data in fields 51a-51c), lamp table 52 (by entering data in fields 52a-52c), variables table 53 (by entering data in fields 53a-53i), instruction table 100, and possibility table 101 (block 60). This operation, which must be performed beforehand, allows the operator to add any further events, buttons and/or variables if necessary.

More specifically, in the case of variables, these are global, have an unequivocal name for the supervisor system as a whole, and, as stated, may be of various types. In the case of an enumerative variable, this must be indicated as such and the possible values defined (e.g. for the "ROUGH MOLD COOLING TYPE" variable, "EXTERNAL COOLING", "INTERNAL COOLING", etc. must be defined; whereas, for a number range variable, the range must be defined (e.g. for the "NUMBER OF CAVITIES" variable, the range 1 to 4). The type of variable, in fact, is essential for supervisor 8 to assign the correct value to the variable when processing the production plan.

A new function within an existing process (to be modified) or in a new process is defined starting from a production process display which provides for calling up a previous process to modify/add a function, or for generating a new process to which to assign one or more functions. An operator request to modify an existing process or to generate a new process (YES output of block 61) is followed by a request for the name and, in the case of a new process, for a brief description of the process (to simplify identification later on). The data entered by the operator is then memorized in process table 54 (Figure 5) (block 62). Supervisor 8 then asks the operator whether any trigger events are to be memorised (block 63). If they are, the operator is allowed to enter one or more trigger events in event table 50 (by entering data in fields 50a-50g), and the trigger event is memorised (block 64). Next, and also in the event of a NO response in block 63, supervisor 8 asks the operator whether any son events are to be memorized (block 65). If they are, the operator is allowed to enter one or more son events (but only if a father event is selected at this stage) in event table 50 (by entering data in fields 50a-50g), and the son event is memorized (block 66).

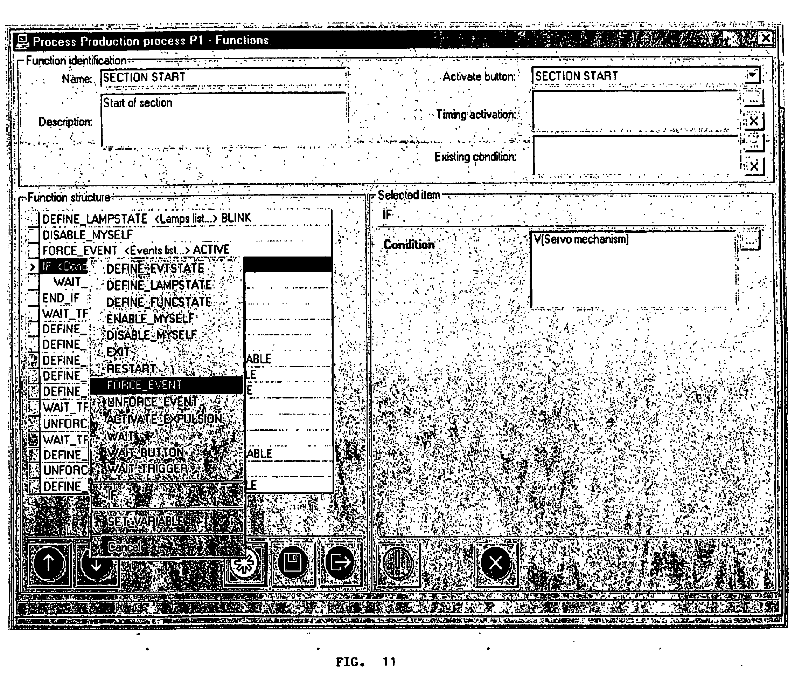

If the function to be generated involves no trigger events (NO output of block 63) or no son events (NO output of block 65), or after memorizing the son events, supervisor 8 allows the new function to be added to the process (block 69); and the operator is shown a new display (function display in Figure 11) and asked to give the name and a brief description of the function (block 70).

Supervisor 8 then asks the operator whether the new function to be memorized is to be related to a logic button in table 51 (block 71), and, if so, memorizes the relationship (block 72) so that the function to be memorized is called up whenever the relative physical button 36 is pressed by the user.

Next, and also in the event of a NO response in block 71, supervisor 8 asks whether any function existence conditions are to be memorized. The operator may enter an existence condition comprising a number of conditions connected by boolean operators (AND, OR, NOT, etc.) and containing arithmetic expressions, comparison operators (equal to, other than, greater than, smaller than, ≥, ≤) and arithmetic operators (addition, subtraction, multiplication, etc.). Existence conditions may employ the predefined variables in variables table 53 (for each of which, the range is given according to the type of variable and what is memorized in variables table 53), so that the operator can define a code covering a given situation whose possible state is represented by the possible variable values as a whole. All these operators are memorized in an operator table 102 and made available to the operator by supervisor 8.

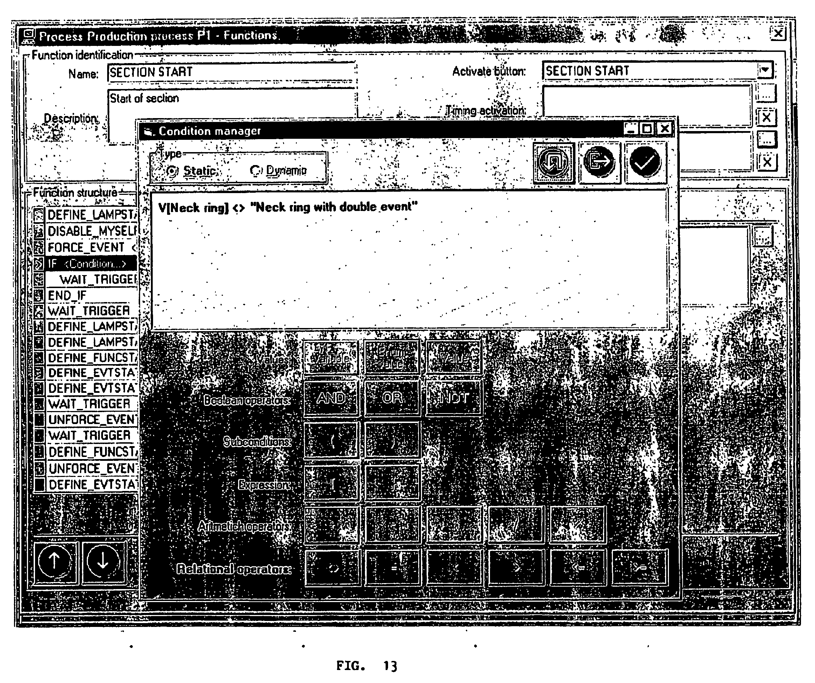

If one or more existence conditions are entered by the operator (YES output of block 73), these are memorized (block 74) as shown in the Figure 13 display.

Next, and also if no existence conditions are defined (NO output of block 73), supervisor 8 shows a list of predefined instructions contained in instruction table 100, and permits selection of one (block 75) as shown in the Figure 11 display.

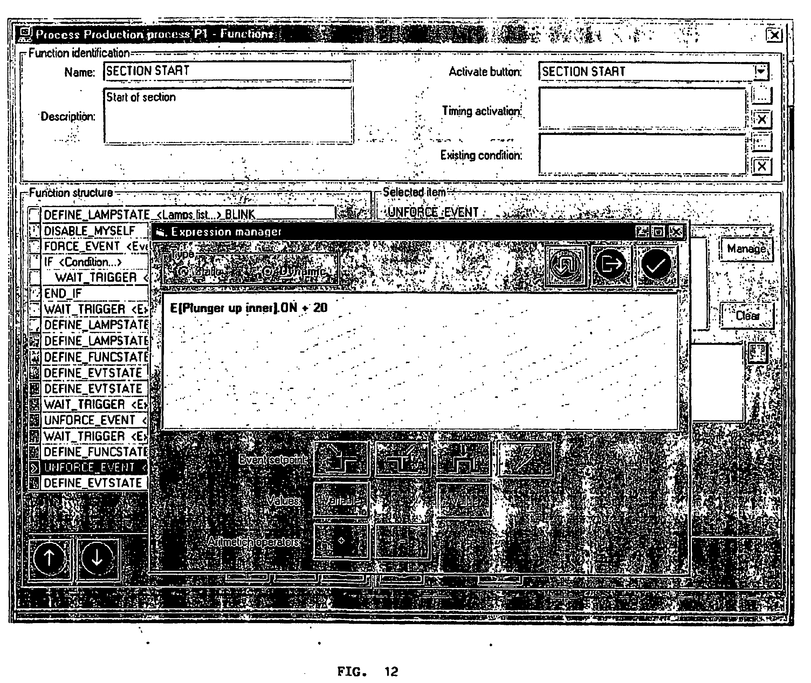

Supervisor 8 also allows each instruction to be accompanied by comments, such as whether it is to be performed immediately, at a given line stage (established by one of the line timing systems), or after a predetermined delay (time or phase), or with reference to a fixed reference point (e.g. the trailing or leading edge of an event). At this stage, too, supervisor 8 guides the operator by means of numeric/boolean expression control modules, or by displaying selection lists and possibly also icons (see, for example, the Figure 12 display) according to what is memorized in event table 50, possibility table 101, specific-instruction table 100, and operator table 102.

Supervisor 8 then determines whether another instruction is to be memorized, and, if so (YES output of block 76 in Figure 10), the operations described above with reference to block 75 are repeated for the next instruction.

If no further instructions for the function being defined are to be entered (NO output of block 76), the supervisor memorizes the function (block 80), goes back to the production process display, and determines whether another function is to be memorized. If so (YES output of block 81), the supervisor is reset to generate another function (block 69) ; if not (NO output of block 81), the supervisor saves the new process (or modified process) (block 82), exits the production process display, and the function definition procedure is terminated.

The Figure 14 flow chart shows how the functions so defined are processed.

Once the individual instructions are related to the desired functions and memorized in process table 54, supervisor 8, on the basis of the instructions and data supplied by the operator, relates the specific process data and specific article data to the line 10 for which the production plan is being processed, and memorizes the relationship in production plan table 58.

When requested by the operator, supervisor 8 then processes the newly memorized production plan and generates the values of the static variables (block 90).

Supervisor 8 then translates all the instructions in the newly memorized production plan into the lowest-level language readable by the timing system, using parser 14 (block 91).

Supervisor 8 then requests and acquires the exact timing data for all the actuator members to generate the values of the dynamic variables and events (block 92), and, when instructed by the operator, transmits the processed production plan to the line (block 93). System variables are valuated during operation of line 10 (block 94).

The method described has the following advantages: In particular, it provides for setting machine operating cycles extremely easily and flexibly to define any required function, and for conditioning the existence of events and functions, i.e. relating each event and/or function to conditions determining whether the event or function exists and is to be performed in a given context. Moreover, instruction performance time can be selected extremely flexibly to perform instructions immediately or after a given delay, when specified conditions or events occur, at predetermined machine stages, or when a given condition is determined.

Thanks to the possibility of entering "IF, THEN, ELSE, END IF" instructions, function performance flow can be conditioned statically or dynamically (e.g. according to the condition and configuration of the line, or the current state of the line when the code is executed).

Defining events unequivocally at plant level eliminates any confusion on the part of the operator when defining the functions, thus eliminating any problems or errors when setting up the line.

Functions can be modified easily and adapted automatically by the supervisor when applying an existing recipe to a different line, by virtue of the supervisor defining operating cycles independently of the specific line. Only at the processing stage is the production plan code updated within the context of a specific line, according to the variable valuation, the relationship between events and the line outputs used by those events, and the button and lamp positions assumed on the line.

The method described is flexible since it allows additional instructions to be created and added to instruction set 100 to accommodate new production requirements.

The number of individual functions is unlimited, and functions can be articulated in any way compatible with operation of the machine.

Clearly, changes may be made to the method as described and illustrated herein without, however, departing from the scope of the accompanying Claims.

## Claims

1. A method of setting operations on a hollow glassware production line (10) comprising a number of controlled moving members (15-39), the method comprising the step of relating a button (36) on said line (10) to a function performable by at least one of said controlled moving members; and being **characterized in that** said step of relating comprises the step of memorizing (75) at least one predefined elementary instruction in a special programming language.

2. A method as claimed in Claim 1, **characterized by** comprising the steps of:
defining (60) a number of elementary instructions, each said elementary instruction being related to an action performable by said at least one of said controlled moving members (15-39) of said line;
supplying (69) a list of said number of elementary instructions to select one,of said number of elementary instructions; and
memorizing (75) the selected elementary instruction.

3. A method as claimed in Claim 2, **characterized in that** said step of defining comprises the steps of:
memorizing (60) a list of events in an event table (50) ;
memorizing (60) a list of buttons (36) and indicators (37) on said line (10) in a button table (51) and lamp table (52); and
memorizing (60) a list of variables in a variables table (53) .

4. A method as claimed in Claim 3, **characterized in that** said step of memorizing a list of events comprises memorizing an event identification field (50a); an event type identification field (50c); a phase identification field (50e) indicating a relationship between said event and one of a number of timing systems of said line; and an existence condition field (50f) indicating existence conditions for said event.

5. A method as claimed in Claim 3 or 4, **characterized in that** said step of memorizing a list of variables comprises memorizing at least one variable identification field (53a); a type identification field (53c) indicating the type of variable; a variability condition identification field (53d); variability value identification fields (53f, 53g); a default value identification field (53h); and a role field (53i) indicating a relationship between said variable and part of said line.

6. A method as claimed in any one of Claims 2 to 5, **characterized in that** said step of supplying is preceded by the step of relating (64) at least one trigger event to said process.

7. A method as claimed in Claim 6, **characterized in that** said step of relating (64) at least one trigger event to said process is followed by the step of relating (66) at least one"son event to said process.

8. A method as claimed in any one of Claims 2 to 7, **characterized in that** said step of supplying comprises determining (73) the presence of any existence conditions relative to said function and governing performance of said function; and memorizing (74) said any existence conditions.

9. A method as claimed in any one of the foregoing Claims, **characterized in that** said step of supplying comprises presenting a list of items (Figures 9, 10) related to each instruction and including performance time conditions, performance logic conditions, and dependence on any variable values.

10. A method as claimed in any one of the foregoing Claims, **characterized in that** said step of memorizing (75) at least one elementary instruction is followed by the steps of:
memorizing (80) said function in a process table (54) containing data relative to generic processes;
relating one of said processes, a specific article and a specific line to a production plan, and memorizing (82) said production plan in a production plan table (58);
processing (90) said production plan and generating values of static variables;
translating (91) said elementary instructions in said production plan into a low-level language;
acquiring (92) exact timing data and generating values of dynamic variables and events to generate a valuated production plan;
sending (93) said valuated production plan to said line.

## Patentansprüche

1. Verfahren des Einrichtens von Arbeitsabläufen in einer Hohlglas-Fertigungslinie (10), die eine Anzahl von gesteuerten Bewegungselementen (15-39) aufweist, wobei das Verfahren den Schritt des Zuordnens eines Knopfes (36) in dieser Linie (10) zu einer Funktion aufweist, die durch wenigstens eines der gesteuerten Bewegungselemente ausführbar ist; und wobei das Verfahren **dadurch gekennzeichnet ist, dass** der Schritt des Zuordnens den Schritt des Speicherns (75) wenigstens eines vordefinierten Elementarbefehls in einer speziellen Programmiersprache aufweist.

2. Verfahren nach Anspruch 1, **dadurch gekennzeichnet, dass** es die folgenden Schritte aufweist:
Definieren (60) einer Anzahl von Elementarbefehlen, wobei jeder dieser Elementarbefehle einen Vorgang betrifft, der durch das wenigstens eine der gesteuerten Bewegungselemente (15-39) der Linie ausführbar ist;
Bereitstellen (69) einer Liste der Anzahl von Elementarbefehlen, um einen von der Anzahl von Elementarbefehlen auszuwählen; und
Speichern (75) des ausgewählten Elementarbefehls.

3. Verfahren nach Anspruch 2, **dadurch gekennzeichnet, dass** der Schritt des Definierens die folgenden Schritte aufweist:
Speichern (60) einer Liste von Ereignissen in einer Ereignistabelle (50);
Speichern (60) einer Liste von Knöpfen (36) und Anzeigeelementen (37) in dieser Linie (10) in einer Knopftabelle (51) und einer Lampentabelle (52); und
Speichern (60) einer Liste von Variablen in einer Variablentabelle (53).

4. Verfahren nach Anspruch 3, **dadurch gekennzeichnet, dass** der Schritt des Speicherns einer Liste von Ereignissen das Speichern eines Ereignis-Identifikationsfeldes (50a); eines Ereignistyp-Identifikationsfeldes (50c); eines Phase-Identifikationsfeldes (50e), das eine Beziehung zwischen dem Ereignis und einem von einer Anzahl von Zeitsteuerungssystemen dieser Linie angibt; und ein Existenzbedingungsfeld (50f), das Existenzbedingungen für das Ereignis angibt.

5. Verfahren nach Anspruch 3 oder 4, **dadurch gekennzeichnet, dass** der Schritt des Speicherns einer Liste von Variablen das Speichern wenigstens eines Variable-Identifikationsfeldes (53a); eines Typ-Identifikationsfeldes (53c), das den Typ der Variable angibt; eines Variabilitätsbedingung-Identifikationsfeldes (53d); von Variabilitätswert-Identifikationsfeldern (53f, 53g); eines Standardwert-Identifikationsfeldes (53h); und eines Aufgabe-Feldes (53i), das eine Beziehung zwischen der Variable und einem Teil der Linie angibt, aufweist.

6. Verfahren nach einem der Ansprüche 2 bis 5, **dadurch gekennzeichnet, dass** dem Schritt des Bereitstellens der Schritt des Zuordnens (64) wenigstens eines Triggerereignisses zu dem Prozess vorausgeht.

7. Verfahren nach Anspruch 6, **dadurch gekennzeichnet, dass** dem Schritt des Zuordnens (64) wenigstens eines Triggerereignisses zu dem Prozess der Schritt des Zuordnens (66) wenigstens eines Sohn-Ereignisses zu dem Prozess folgt.

8. Verfahren nach einem der Ansprüche 2 bis 7, **dadurch gekennzeichnet, dass** der Schritt des Bereitstellens das Bestimmen (73) des Vorhandenseins von irgendwelchen Existenzbedingungen bezüglich der Funktion und der Steuerung der Ausführung der Funktion, und das Speichern (74) dieser irgendwelchen Existenzbedingungen aufweist.

9. Verfahren nach irgendeinem der vorhergehenden Ansprüche, **dadurch gekennzeichnet, dass** der Schritt des Bereitstellens das Darstellen einer Liste von Objekten (Figuren 9, 10) in Bezug auf jeden Befehl und einschließlich Ausführungs-Zeit-Bedingungen, Ausführungs-Logik-Bedingungen und die Abhängigkeit von irgendwelchen Variablenwerten aufweist.

10. Verfahren nach irgendeinem der vorhergehenden Ansprüche, **dadurch gekennzeichnet, dass** dem Schritt des Speicherns (75) wenigstens eines Elementarbefehls folgende Schritte folgen:
Speichern (80) der Funktion in einer Prozesstabelle (54), die Daten in Bezug auf generische Prozesse aufweist;
Zuordnen eines der Prozesse, eines speziellen Artikel und einer speziellen Linie zu einem Produktionsplan, und Speichern (82) des Produktionsplans in einer Produktionsplantabelle (58);
Verarbeiten (90) des Produktionsplans und Erzeugen von Werten statischer Variablen;
Übersetzen (91) der Elementarbefehle in dem Produktionsplan in eine maschinenorientierte Sprache;
Erfassen (92) der exakten Zeitsteuerungsdaten und Erzeugen von Werten dynamischer Variablen und Ereignisse, um einen bewerteten Produktionsplan zu erzeugen;
Senden (93) des bewerteten Produktionsplans zu der Linie.

## Revendications

1. Procédé pour régler des opérations sur une ligne de production de verre creux (10) comprenant de multiples éléments mobiles commandés (15-39), le procédé comprenant l'étape visant à relier un bouton (36) sur ladite ligne (10) à une fonction exécutable par au moins un desdits éléments mobiles commandés, et étant **caractérisé en ce que** ladite étape de liaison comprend l'étape visant à mémoriser (75) au moins une instruction élémentaire prédéfinie dans un langage de programmation spécial.

2. Procédé selon la revendication 1, **caractérisé en ce qu'**il comprend les étapes suivantes :
- définir (60) de multiples instructions élémentaires, chaque instruction élémentaire étant reliée à une action exécutable par ledit au moins un desdits éléments mobiles commandés (15-39) de ladite ligne;
- fournir (69) une liste desdites multiples instructions élémentaires afin de sélectionner l'une desdites multiples instructions élémentaires; et
- mémoriser (75) l'instruction élémentaire sélectionnée.

3. Procédé selon la revendication 2, **caractérisé en ce que** ladite étape de définition comprend les étapes suivantes :
- mémoriser (60) une liste d'événements dans une table d'événements (50);
- mémoriser (60) une liste de boutons (36) et d'indicateurs (37) sur ladite ligne (10) dans une table de boutons (51) et une table de lampes (5-2); et
- mémoriser (60) une liste de variables dans une table de variables (53).

4. Procédé selon la revendication 3, **caractérisé en ce que** ladite étape de mémorisation d'une liste d'événements comprend la mémorisation d'un champ d'identification d'événement (50a); d'un champ d'identification du type d'événement (50c); d'un champ d'identification de phase (50e) indiquant une relation entre ledit événement et l'un des multiples systèmes de synchronisation de ladite ligne; et d'un champ de conditions d'existence (50f) indiquant des conditions d'existence pour ledit événement.

5. Procédé selon la revendication 3 ou 4, **caractérisé en ce que** ladite étape de mémorisation d'une liste de variables comprend la mémorisation d'au moins un champ d'identification de variable (53a); d'un champ d'identification de type (53c) indiquant le type de variable; d'un champ d'identification de conditions de variabilité (53d); de champs d'identification de valeurs de variabilité (53f; 53g); d'un champ d'identification de valeur par défaut (53h); et d'un champ de rôle (53i) indiquant une relation entre ladite variable et une partie de ladite ligne.

6. Procédé selon l'une quelconque des revendications 2 à 5, **caractérisé en ce que** ladite étape de fourniture est précédée par l'étape de liaison (64), d'au moins un événement de déclenchement audit processus.

7. Procédé selon la revendication 6, **caractérisé en ce que** ladite étape de liaison (64) d'au moins un événement de déclenchement audit processus est suivie par l'étape de liaison (66) d'au moins un événement "fils" audit processus.

8. Procédé selon l'une quelconque des revendications 2 à 7, **caractérisé en ce que** ladite étape de fourniture comprend la détermination (73) de la présence de toutes conditions d'existence relatives à ladite fonction et la conduite de l'exécution de ladite fonction; et la mémorisation (74) desdites toutes conditions d'existence.

9. Procédé selon l'une quelconque des revendications précédentes, **caractérisé en ce que** ladite étape de fourniture comprend la présentation d'une liste d'articles (Fig. 9, 10) reliés à chaque instruction et comprenant les conditions temporelles d'exécution, les conditions logiques d'exécution et la dépendance de toutes valeurs de variables.

10. Procédé selon l'une quelconque des revendications précédentes, **caractérisé en ce que** ladite étape de mémorisation (75) d'au moins une instruction élémentaire est suivie par les étapes suivantes ;
- mémoriser (80) ladite fonction dans une table de processus (54) contenant des données relatives à des processus génériques;
- relier l'un desdits processus, un article spécifique et une ligne spécifique à un plan de production, et mémoriser (82) ledit plan de production dans une table de plans de production (58);
- traiter (90) ledit plan de production et générer des valeurs de variables statiques;
- traduire (91) lesdites instructions élémentaires dudit plan de production dans un langage de bas niveau;
- acquérir (92) des données de synchronisation exactes et générer des valeurs de variables dynamiques et d'événements pour générer un plan de production évalué;
- envoyer (93) ledit plan de production évalué à ladite ligne.
